# EUROPÄISCHE PATENTSCHRIFT

(11) **EP 0 841 311 B1**
(45) Veröffentlichungstag und Bekanntmachung des Hinweises auf die Patenterteilung: **21.03.2001**
(21) Anmeldenummer: 97118782.8
(22) Anmeldetag: 29.10.1997
(51) Int. Cl.: C04B 35/589, C04B 35/80

(54) **Silizium-, Bor- und Stickstoff-enthaltende amorphe Fasern, Verfahren zu deren Herstellung und deren Verwendung sowie Komposite, enthaltend diese Fasern und deren Herstellung**
Silicon-, boron- and nitrogen-containing amorphous fibres, method of making them and their use as well as composites containing these fibres and their production
Fibres amorphes contenant silicium, bore et nitrogène, procédé de leur fabrication et leur utilisation et composites contenant ces fibres et leur fabrication

(30) Priorität: 11.11.1996 DE 19646406
(43) Veröffentlichungstag der Anmeldung: 13.05.1998
(73) Patentinhaber: BAYER AG, 51368 Leverkusen (DE)
(72) Erfinder: Baldus, Hans-Peter, Dr., 51379 Leverkusen (DE); Passing, Gerd, Dr., 50668 Köln (DE); Eiling, Aloys, Dr., 44866 Bochum (DE)

(56) Entgegenhaltungen:
- EP-A- 0 496 137
- WO-A-96/13472

## Beschreibung

Die Erfindung betrifft Si, B, N-enthaltende amorphe Fasern, Verfahren zu deren Herstellung und deren Verwendung sowie Komposite, enthaltend diese amorphe Fasern und deren Herstellung.

Die Faserverstärkung von Werkstoffen verursacht Änderungen der mechanischen Eigenschaften und eröffnet neue Einsatzmöglichkeiten. In Metallen bleibt z.B. die Festigkeit bei hohen Temperaturen durch Einlagerung keramischer Fasern erhalten (Advanced Structural Fiber Composites, Techna Srl, 1995, Seiten 281-292). In keramischen Werkstoffen führen Fasern beispielsweise zu einer Erhöhung der Bruchzähigkeit und der Bruchenergie (Concise Encyclopedia of Advanced Ceramic Materials, Pergamon Press, 1991, Seiten 155-160). Eine wichtige Rolle spielt in faserverstärkten Werkstoffen (Kompositen) die Faserbeschichtung, die aufgrund ihrer, im Vergleich zu Faser und Matrix, veränderten Festigkeit zu Rißablenkung im Komposit führt. Einfluß auf die Eigenschaften der Komposite haben die chemische Zusammensetzung, die morphologische Gestalt und die Dicke der Beschichtung. In Kompositen mit keramischer Matrix und anorganischen Fasern werden diese Fasern bevorzugt mit pyrolytischem Kohlenstoff in Form von hexagonal kristallisierendem Graphit oder mit kristallinem, hexagonalem Bornitrid beschichtet, verwendet, da diese Schicht die für eine Rißablenkung notwendige geringe Festigkeit im Vergleich zu Matrix und Faser aufweist (Mat. Res. Soc. Symp. Proc., Vol. 365, 1995, Seiten 403-410 und Mat. Res. Soc. Symp. Proc., Vol. 365, 1995, Seiten 383-388). An Luft scheitert jedoch der Einsatz faserverstärkter Komposite mit einer kohlenstoffhaltigen Beschichtung bei hohen Temperaturen (>600°C) an der Oxidation der Faserbeschichtungen. Dieser Effekt führt zur Versprödung der Werkstoffe (Komposite) und damit zu deren vorzeitigem Versagen.

Sind die Fasern mit einer Schicht aus hexagonalem BN beschichtet, dann ist die Beschichtung bei Temperaturen >900°C und ungehindertem Luftzutritt ebenfalls anfällig gegenüber Oxidation. Diese Beschichtungen sind jedoch oxidationsstabiler als solche aus Kohlenstoff und werden bei Anwesenheit von SiC bzw. Si₃N₄ im Komposit bei reduziertem Sauerstoffangebot auch nicht angegriffen, so lange noch SiC bzw. Si₃N₄ zur Oxidation zur Verfügung steht (J. Am. Ceram. Soc., Vol. 79, 1996, Nr. 2, Seiten 539-543).

Das Aufbringen einer hexagonalen BN- oder C-haltigen Beschichtung auf die Fasern ist jedoch aufwendig, so z. B. das technisch aufwendige CVD (Chemical Vapor Deposition)-Verfahren (J. Am. Ceram. Soc, Vol. 74, 1991, Nr. 10, Seiten 2482-2488 und Euro-Ceramics II, Vol. 2, Structural Ceramics and Composites, 1995, Seiten 1657-1665) oder die Beschichtung der Fasern in einer Lösung mit B-haltigen Verbindungen, die in einem separaten Verfahrensschritt bei hohen Temperaturen in hexagonal kristallisierendes BN umgewandelt werden muß (Ceramic Engineering and Science Proc., Vol. 14, Part 7/8, Seiten 556-562).

In WO 96/13472 wird eine CVD-Beschichtung mit der Zusammensetzung B(Si)N mit erhöhter Oxidations- und Hydrolysebeständigkeit beschrieben. Die Beschichtung ist röntgenamorph.

Aus Mat. Res. Soc. Symp. Proc. Vol. 410, 1996, Seiten 185 - 190 sind aus polymeren Vorstufen hergestellte Keramiken bekannt, die auf SiN(C)B basieren. Mit röntgenographischen Untersuchungen konnte kein kristallines BN nachgewiesen werden.

Als zu beschichtende Fasern eignen sich SiC-, Si₃N₄-, SiCN-, SiCO- oder SiNCO-Fasern. Bei diesen Fasern muß jedoch die Beschichtung aus hexagonalem BN in einem aufwendigen separaten Schritt aufgebracht werden. Ein weiterer Nachteil dieser beschichteten Fasern ist, daß damit hergestellte Komposite bei hohen Temperaturen nicht langzeitbeständig sind, weil z. B. eine Kristallisation der amorphen Fasern oder Kornwachstum bei den kristallinen Fasern auftritt, was unter anderem zum Verlust der Festigkeit führt (J. Europ. Ceram. Soc., Vol. 16, 1996, Seiten 653-659 und Key Eng. Mater., Vol. 89-91, 1994, Seiten 95-99).

Von Aluminium-Borsilicatfasern ist bekannt, daß diese durch eine gezielte Hitzebehandlung in NH₃ mit einer kristallinen BN-Schicht überzogen werden können. Das Bor zur Erzeugung des BN liefert hierbei die Faser, so daß keine externe B-Quelle notwendig ist. Die in-situ erzeugte BN-Schicht ist jedoch nicht gegen Oxidation durch z. B. Luftsauerstoff geschützt. Ein weiterer Nachteil bei diesem Herstellungsverfahren ist, daß die Aluminium-Borsilicatfasern auskristallisieren (Mat. Res. Soc. Symp. Proc., Vol. 365, 1995, Seiten 389-394). Aufgrund von Korngrenzengleiten weisen (teil-)kristalline Fasern bei hohen Temperaturen bekanntermaßen schlechte mechanische Eigenschaften auf.

Aus DE-A- 195 30 404 sind Fasern, die Si, B, N, C und O in Form von Verbindungen enthalten, im folgenden abgekürzt als SiBNC, ohne Berücksichtigung der Stöchiometrie und des Sauerstoffs, der eine Verunreinigung darstellt, bekannt, die bezüglich der thermischen Stabilität den bislang bekannten überlegen sind. Diese sind in dieser Form jedoch nicht geeignet, um in keramische Materialien eingearbeitet zu werden.

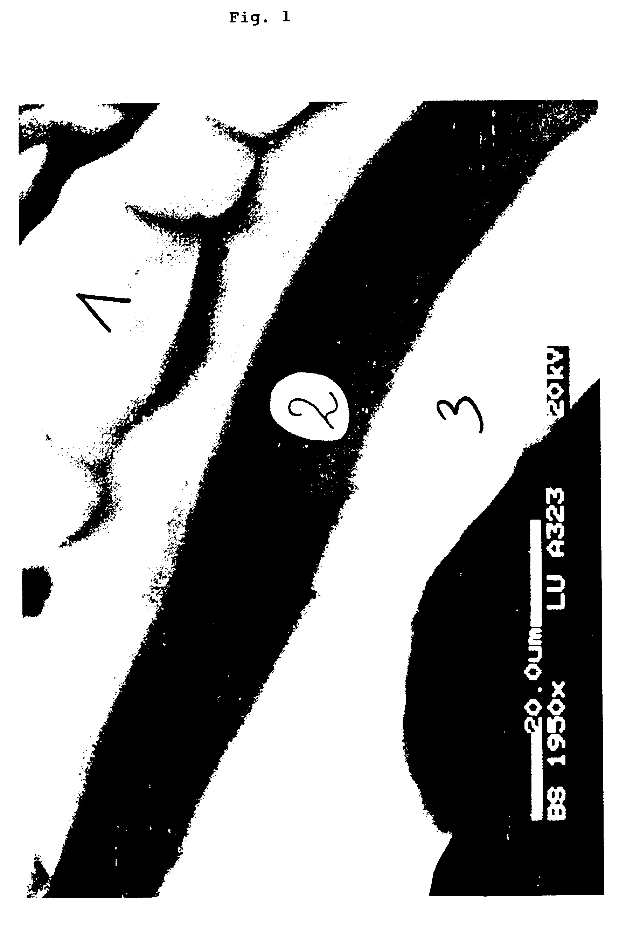

Von SiBNC-Pulverteilchen ist bekannt, daß die thermische Oxidation zur Ausbildung einer amorphen B- und N-haltigen Schicht, die auch geringe Anteile Silicium und Sauerstoff enthält und einer darüberliegenden SiO₂-Schicht führt (siehe Fig. 1, Advances in Science and Technology, Vol. 7, 1995 Seiten 125-132 und Mat. Res. Soc. Symp. Proc., Vol. 346, 1994 Seiten 617-622). Diese Doppelschicht ist an Luft beständig bis 1600°C. Die untere B,N-haltige Schicht zeigt eine gute Anbindung, sowohl zum SiBNC als auch zum SiO₂.

Für eine Verwendung als Faserbeschichtung sind amorphe Schichten jedoch nicht geeignet, da bekanntermaßen nur Beschichtungen mit schichtartiger Kristallstruktur (hexagonales-BN, Graphit) die geringere Festigkeit im Vergleich zu Matrix und Faser aufweisen und damit zu keramikfaserverstärkten Werkstoffen mit hohen Bruchzähigkeiten führen.

Es bestand daher ein Bedarf an Fasern, die bei Temperaturen bis zu 1600°C amorph bleiben und die eine oxidationsstabile, hexagonales BN enthaltene Beschichtung aufweisen und in anorganischen Materialien eingearbeitet werden können. Dabei sollte die Schicht ohne aufwendiges Herstellverfahren aufgebracht werden können. Zudem sollten Komposite, enthaltend anorganisches Material und beschichtete Fasern, rißablenkende Eigenschaften aufweisen.

Aufgabe der vorliegenden Erfindung war daher die Bereitstellung von beschichteten Fasern, die über dieses Eigenschaftsprofil verfügen.

Überraschenderweise wurde gefunden, daß Si, B, N-enthaltende amorphe Fasern, die sich zusammensetzen aus einem Kern, der zu mehr als 80 Vol-% aus einem dreidimensionalen glasartigen Netzwerk besteht, das SiN- sowie BN- und gegebenenfalls auch SiO-, SiC-, BC-, CC-, CN- und/oder BO-Bindungen enthält, im folgenden abgekürzt als SiBNC (unabhängig von der Stöchiometrie und ohne Berücksichtigung des nur als Verunreinigung enthaltenen Sauerstoffs), und mindestens einer darüberliegenden Beschichtung, die BN-Kristalle mit hexagonaler Struktur sowie Si, das mindestens eine Bindung zu Sauerstoff, Bor, Stickstoff und/oder Kohlenstoff aufweist, enthält, diese Anforderungen erfüllen und zudem diese Fasern, eingebettet in eine Matrix, dieser hervorragende rißableitende Eigenschaften verleihen.

Gegenstand der Erfindung sind daher Si, B, N-enthaltende amorphe Fasern, die sich zusammensetzen aus einem Kern, der zu mehr als 80 Vol-% aus einem dreidimensionalen glasartigen Netzwerk besteht, das SiN- sowie BN- und gegebenenfalls auch SiO-, SiC-, BC-, CC-, CN- und/oder BO-Bindungen enthält und mindestens einer darüberliegenden Beschichtung, die BN-Kristalle mit hexagonaler Struktur sowie Si, das mindestens eine Bindung zu Sauerstoff, Bor, Stickstoff und/oder Kohlenstoff aufweist, enthält. Diese BN-Kristalle befinden sich zu mindestens 1 Vol-%, bevorzugt 5 Vol-% ≤ x ≤ 100 Vol-% in der Beschichtung.

Die hexogonale Struktur der BN-Kristalle kann auch Defekte aufweisen. In diesem Fall spricht man von turbostratischem BN.

Die Schichtdicke der BN-Kristalle enthaltenen Beschichtung ist dabei vorzugsweise 0,5 nm bis 10 µm.

Die BN-Kristalle weisen dabei vorzugsweise eine durchschnittliche Kristallitgröße von 1 nm bis 2 µm, vorzugsweise 5 nm bis 500 nm auf.

Bei den Si, B, N-enthaltenden amorphen Fasern handelt es sich vorzugsweise um Fasern, wie sie in DE-A- 195 30 404 beschrieben sind. Ebenfalls bevorzugt sind Fasern, die mindestens 0,5 Gew.-% B und 0,65 Gew.-% N enthalten. Der Sauerstoffgehalt der Fasern sollte 10 Gew.-% nicht übersteigen. Besonders bevorzugt sind Fasern mit B-Gehalten von 4 ≤ X ≤ 20 Gew.-%, N-Gehalten von 5 ≤ X ≤ 50 Gew.-%, Si-Gehalten von 10 ≤ X ≤ 50 Gew.-%, C-Gehalten von 0 ≤ X ≤ 35 Gew.-%, bevorzugt 3 ≤ X ≤ 32 Gew.-%, und O-Gehalten von 0 ≤ X ≤ 8 Gew.-%, bevorzugt 0,01 ≤ X ≤ 5 Gew.-%.

In einer Ausführungsform der Erfindung weist die BN-Kristalle sowie Si, das mindestens eine Bindung zu Sauerstoff, Bor, Stickstoff und/oder Kohlenstoff aufweist, enthaltende Beschichtung zusätzlich auch Anteile an amorphem BN auf. Die zusätzlich zu kristallinem BN vorliegenden Bestandteile können neben dem kristallinen BN in einer Beschichtung oder auch separat von dieser als eigenständige, darüberliegende Beschichtung vorliegen. Si, das mindestens eine Bindung zu Sauerstoff, Bor, Stickstoff und/oder Kohlenstoff aufweist, sowie amorphes BN sind vorzugsweise in Anteilen von 1 Vol-% ≤ x ≤ 95 Vol-% in der BN-Kristalle enthaltenen Beschichtung enthalten.

In einer besonders bevorzugten Ausführungsform befindet sich über der BN-Kristalle enthaltenen Beschichtung noch eine darüberliegende Schicht, die überwiegend aus SiO₂ besteht. Weitere Bestandteile dieser SiO₂-enthaltenden Schicht können Verbindungen aus den Elementen C, N, B und/oder O sein. Die Schichtdicke der SiO₂-enthaltenden Schicht beträgt vorzugsweise zwischen 0,5 nm und 20 µm. Das SiO₂ ist dabei vorzugsweise amorph. Ein entscheidender Vorteil dieser doppelten Faserbeschichtung liegt darin, daß diese hexagonale BN-Partikel sowie Si, das mindestens eine Bindung zu Sauerstoff, Bor, Stickstoff und/oder Kohlenstoff aufweist, enthaltende Beschichtung während der Oxidation nicht verschwindet, sondern bis zur vollständigen Oxidation der Si, B, N-enthaltenden amorphen Fasern bestehen bleibt bzw. bei oxidativem Angriff immer wieder neu gebildet wird.

Die erfindungsgemäßen Si, B, N-enthaltenden amorphen Fasern zeichnen sich durch eine hohe Oxidationsbeständigkeit aus.

Rasterelektronenmikroskopische (REM-)Untersuchungen an den erfindungsgemäßen amorphen Fasern, die ebenfalls über eine darüberliegende SiO₂-enthaltende Beschichtung verfügen, zeigen, daß ein Riß, der in die SiO₂-enthaltende Schicht hineinläuft, am Übergang zur darunterliegenden BN-Kristalle sowie Si, das mindestens eine Bindung zu Sauerstoff, Bor, Stickstoff und/oder Kohlenstoff aufweist, enthaltenden Beschichtung, abgelenkt wird und parallel zur Faseroberfläche weiterläuft. Dieses rißablenkende Verhalten prädestiniert die Faser für einen Einsatz in faserverstärkten anorganischen Kompositen. Weiterhin konnte anhand von transmissionselektronenmikroskopischen (TEM)-Untersuchungen nachgewiesen werden, daß die Anbindung der BN-Kristalle sowie Si, das mindestens eine Bindung zu Sauerstoff, Bor, Stickstoff und/oder Kohlenstoff aufweist, enthaltenen Beschichtung an die Si,B,N,C und O-enthaltende Faserseele in einem kontinuierlichen Übergang erfolgt. Die kristallinen BN-Partikel bestehen aus turbostratischem und hexagonalem BN. Die Si, B, N, C und O-enthaltende amorphe Faser bleibt ebenso wie die SiO₂-enthaltende Schicht amorph. Auch die Anbindung der BN-Kristalle sowie Si, das mindestens eine Bindung zu Sauerstoff, Bor, Stickstoff und/oder Kohlenstoff aufweist, enthaltenen Beschichtung an die SiO₂-enthaltende Schicht erfolgt über einem kontinuierlichen Übergang.

Gegenstand der Erfindung ist zudem ein Verfahren zur Herstellung der erfindungsgemäßen Si, B, N-enthaltenden amorphen Fasern, in welchem Si, B, N-enthaltende amorphe Fasern, die zu mehr als 80 Vol-% aus einem dreidimensionalen glasartigen Netzwerk bestehen, das SiN- sowie BN- und gegebenenfalls auch SiO-, SiC-, BC-, CC-, CN- und/oder BO-Bindungen enthält, thermisch oxidiert werden.

Als zu oxidierende Si, B, N-enthaltende amorphe Fasern werden vorzugsweise die in DE-A- 195 30 404 beschriebenen Fasern eingesetzt. Diese werden vorzugsweise nach dem dort beschriebenen Verfahren, ausgehend von Polyborosilazan (PBS)-Grünfasern hergestellt. In diesem Fall werden vor der pyrolytischen Umwandlung in die amorphe Faser (SiBNC) die PBS-Grünfasern mit reaktiven Vernetzungsreagentien behandelt. Als reaktive Vernetzungsreagentien werden vorzugsweise NH₃, primäre Amine, Hydrazin, Silane mit mindestens einer Si-H-Bindung und/oder mindestens eine BH-Bindung aufweisende Borane eingesetzt. Durch diese Behandlung werden die Grünfasern unschmelzbar gemacht. Die Pyrolyse wird vorzugsweise ebenfalls nach dem in DE-A- 195 30 404 beschriebenen Verfahren durchgeführt. Als Pyrolysetemperatur sind Temperaturen zwischen 1200 und 1800°C bevorzugt.

Die thermische Oxidation der Si, B, N-enthaltenden amorphen Faser wird vorzugsweise bei Temperaturen von 800 ≤ T ≤ 1700°C über einen Zeitraum von 0,1 min ≤ t ≤ 100 h durchgeführt. Besonders geeignet sind Temperaturen von 1000°C ≤ T ≤ 1600°C. Die Aufheiz- und Abkühlrate kann im Bereich zwischen 0,5°C/min und 150°C/s gewählt werden, bevorzugt werden Raten von 5 ≤ x ≤ 125°C/s. Die Haltezeit der Oxidationsbehandlung (ohne Aufheiz- und Abkühlphase) liegt vorzugsweise in einem Zeitraum von 1 min ≤ t ≤ 24 h.

In den zur thermischen Oxidation der amorphen Fasern bei hohen Temperaturen verwendeten Gasen liegt der verwendete Sauerstoff frei oder in gebundener Form vor. Bevorzugte oxidierende Gase sind vorzugsweise Luft, Sauerstoff, CO₂, gasförmiges H₂O und/oder Stickoxide. Diese Gase können mit inerten Gasen verdünnt werden, um die Partialdrücke der oxidierenden Gase einzustellen. Geeignete inerte Gase sind z. B. N₂, CO, sowie Edelgase oder deren Gemische. Die Reinheit der verwendeten Gase sollte größer 95 Vol.-% betragen, bevorzugt größer 99,9 Vol.-%.

Vorzugsweise wird daher das erfindungsgemäße Verfahren über einen Zeitraum von 0,1 min ≤ t ≤ 100 h bei Temperaturen von 800°C ≤ T ≤ 1700°C, bei einem Druck von 1 mbar ≤ p ≤ 5 bar in Luft, Sauerstoff, CO₂, gasförmigem H₂O und/oder Stickoxiden durchgeführt.

Eine andere Möglichkeit zur Einstellung der Partialdrücke der oxidierenden Gase ist die Verwendung von Über- bzw. Unterdruck. Thermodynamische Berechnungen mit dem Programm Equitherm zeigen, daß als Reaktionsprodukte in erster Linie SiO₂ und N₂ und bei Sauerstoffüberschuß zusätzlich B₂O₃ und CO entstehen. Sowohl SiO₂ als auch B₂O₃ dampfen bei hohen Temperaturen in Form flüchtiger Sekundärprodukte, z. B. als SiO, B₂O₃ bzw. BO, ab. Die thermische Oxidation der amorphen Fasern wird vorzugsweise bei Drücken zwischen 1 mbar und 5 bar durchgeführt. Bevorzugt wird ein Bereich von 10 mbar bis 2 bar.

Abdampfeffekte oxidischer Reaktionsprodukte können durch hohe Gasgeschwindigkeiten im Oxidationsofen gefördert werden. Durch den kontinuierlichen bzw. mehrmaligen Austausch der Ofenatmosphäre wird der Partialdruck gasförmiger Reaktions- und Sekundärprodukte in der Ofenatmosphäre klein gehalten. Typischerweise wird die Ofenatmosphäre während der Oxidationszeit zwischen 5 mal und 60.000 mal ausgetauscht.

Die Oxidation der Si, B, N-enthaltenden amorphen Fasern, die zu mehr als 80 Vol.-% aus einem dreidimensionalen glasartigen Netzwerk bestehen und SiN-sowie BN und gegebenenfalls auch SiO-, SiC-, BC-, CC- und/oder BO-Bindungen enthalten, kann vorzugsweise in einer oxidierenden Flamme erfolgen.

Die zu oxidierenden Si, B, N-enthaltenden amorphen Fasern, die zu mehr als 80 Vol.-% aus einem dreidimensionalen glasartigen Netzwerk bestehen und SiN-sowie BN und gegebenenfalls auch SiO-, SiC-, BC-, CC- und/oder BO-Bindungen enthalten, können lose, in gewebter, gewickelter oder verpreßter Form vorliegen.

In einer bevorzugten Ausführungsform der Erfindung werden die erfindungsgemäßen Si, B, N-enthaltenden amorphen Fasern nach der thermischen Oxidation einer thermischen Nachbehandlung in nicht oxidierender Atmosphäre unterzogen. Die zur thermischen Nachbehandlung der mit einer BN-Kristalle sowie Si, das mindestens eine Bindung zu Sauerstoff, Bor, Stickstoff und/oder Kohlenstoff aufweist, enthaltenen Beschichtung versehenen amorphen Fasern verwendeten Gase können inert oder reduzierend sein. Bevorzugt sind N₂, CO und/oder Edelgase. Die Gase weisen vorzugsweise eine ausreichende Reinheit auf, um die erzeugte BN-Kristalle sowie Si, das mindestens eine Bindung zu Sauerstoff, Bor, Stickstoff und/oder Kohlenstoff aufweist, enthaltenen Beschichtung und die amorphen Fasern nicht weiter zu oxidieren. Schädliche Verunreinigungen sind z.B. O₂, CO₂ und H₂O. Die Verunreinigungen überschreiten vorzugsweise 1 Vol.-%, besonders bevorzugt 0,1 Vol.-% nicht.

Die thermische Nachbehandlung wird vorzugsweise bei Drücken ≤ 5 bar durchgeführt. Besonders bevorzugt ist ein Druckbereich von 10⁻⁵ bis 2 bar.

Eine mögliche Nachbehandlung der erfindungsgemäßen amorphen Fasern wird vorzugsweise über einen Zeitraum von 5 min ≤ t ≤ 140 h bei 800 ≤ T ≤ 1900°C bei Drücken zwischen 10⁻⁵ und 2 bar in nicht-oxidierender Atmosphäre durchgeführt. Besonders geeignet sind Temperaturen von 1000°C ≤ T ≤ 1700°C. Die Aufheiz- und Abkühlrate kann im Bereich von 0,5°C/min und 150°C/s gewählt werden, bevorzugt werden Raten von 5 ≤ x ≤ 125°C/s. Die Dauer der Nachbehandlung liegt vorzugsweise in einem Zeitraum von 10 min ≤ T ≤ 50 h.

Während der thermischen Nachbehandlung der erfindungsgemäßen Fasern können oxidische Reaktionsprodukte, z. B. SiO₂ oder B₂O₃ durch Abdampfen aus der Faserbeschichtung entfernt werden. Dieser Prozeß wird durch niedrige Partialdrücke der abdampfenden Sekundärprodukte (z. B. SiO, B₂O₂ bzw. BO) im umgebenden Gas unterstützt. Der Effekt kann durch hohe Gasgeschwindigkeiten im Nachbehandlungsofen weiter erhöht werden. Durch den kontinuierlichen bzw. mehrmaligen Austausch der Ofenatmosphäre wird der Partialdruck gasförmiger Sekundärprodukte in der Ofenatmosphäre klein gehalten. Die Ofenatmosphäre wird hierzu während der Nachbehandlungszeit vorzugsweise zwischen 5 mal und 60.000 mal ausgetauscht.

Die thermisch nachzubehandelnden Si, B, N-enthaltenden amorphen Fasern können lose, in gewebter, gewickelter oder verpreßter Form vorliegen.

Die Vorteile einer derart hergestellten Beschichtung liegen darin, daß a) keine externe Borquelle benötigt wird, b) keine externe Stickstoff-Quelle benötigt wird, c) die Beschichtung in Luft erzeugt werden kann, so daß keine teuren Reaktionsgase und technisch aufwendigen Schutzgasöfen verwendet werden müssen, d) durch den kontinuierlichen Übergang zwischen der BN-Kristalle sowie Si, das mindestens eine Bindung zu Sauerstoff, Bor, Stickstoff und/oder Kohlenstoff aufweist, enthaltenden Beschichtung und der Faserseele eine gute chemische Anbindung gegeben ist, e) die gegebenenfalls vorhandene SiO₂-enthaltende Schicht als zusätzliche Interfaceschicht zwischen Faserseele und Matrix und außerdem als weitere Diffusionsbarriere für Sauerstoff zum Schutz der BN-Kristalle sowie Si, das mindestens eine Bindung zu Sauerstoff, Bor, Stickstoff und/oder Kohlenstoff aufweist, enthaltenden Schicht und den Si, B, N-enthaltenden amorphen Fasern vor Oxidation dienen kann und f) die Si, B, N-enthaltenden amorphen Fasern bei dieser Behandlung nicht auskristallisieren.

In einer Ausführungsform der Erfindung wird die SiO₂-enthaltende Schicht in einem nachfolgenden Verfahrensschritt entfernt. Dies geschieht z. B. durch Ätzen mit HF-Gas oder in wässriger Lösung durch Flußsäure. In dieser Form wirkt nur die BN-Kristalle sowie Si, das mindestens eine Bindung zu Sauerstoff, Bor, Stickstoff und/oder Kohlenstoff aufweist, enthaltene Beschichtung als Faser/Matrix-Interface.

Ebenfalls möglich ist die Entfernung der SiO₂-enthaltenden Schicht durch Abdampfen während der thermischen Nachbehandlung.

Gegenstand der Erfindung ist zudem die Verwendung der erfindungsgemäßen Si, B, N-enthaltenden amorphen Faser als Faserverstärkung in anorganischen Werkstoffen.

Die Matrixwerkstoffe können beispielsweise aus Metallen, Legierungen, Gläsern oder Keramiken oder deren Mischungen bestehen. Die Gläser sind aus Oxiden, Nitriden oder Carbiden oder deren Mischungen zusammengesetzt und die Keramiken aus Oxiden, Nitriden, Carbiden, Boriden oder Siliciden oder deren Mischungen. Die Fasern können als Kurz- oder Langfasern verwendet werden.

Gegenstand der Erfindung sind zudem Komposite mit einer Matrix aus Metallen, Legierungen, Gläsern, enthaltend mindestens eine erfindungsgemäße Si, B, N-enthaltende amorphe Faser. Vorzugsweise bestehen die Komposite zu 30 bis 70 Vol.-% aus den erfindungsgemäßen Si, B, N-enthaltenden amorphen Fasern. Die für faserverstärkte Komposite bekannten Herstellungsverfahren, wie Advanced Strucrural Fiber Composites, Techna Srl, 1995, Seiten 281-292, Concise Encyclopedia of Advanced Ceramic Materials, Pergamon Press, 1991, Seiten 155-160, Chem.-Ing.-Tech., Vol. 57, 1985, Nr. 9, Seiten 737-746, Advanced Strucrural Fiber Composites, Techna Srl, 1995, Seiten 403-411 und Euro-Ceramics II, Vol. 2, Structural Ceramics and Composites, 1995, Seiten 1673-1677, können auch bei Herstellung der erfindungsgemäßen Komposite angewandt werden. Zudem sind die für die thermische Nachbehandlung der Si, B, N-enthaltenden amorphen Fasern gewählten Bedingungen auch auf die Herstellbedingungen bei Kompositen übertragbar.

Die Herstellung der erfindungsgemäßen Komposite kann auch so erfolgen, daß mindestens eine Si, B, N-enthaltende amorphe Faser, die zu mehr als 80 Vol-% aus einem dreidimensionalen glasartigen Netzwerk besteht, das SiN- sowie BN und gegebenenfalls auch SiO-, SiC-, BC-, CC-, CN- und/oder BO-Bindungen enthält, in Metalle, Legierungen, Gläser und/oder Keramiken eingebettet und zusammen mit diesen über einen Zeitraum von 0,1 min ≤ t ≤ 100 h bei Temperaturen von 800°C ≤ T ≤ 1700°C, bei einem Druck von 0,1 mbar ≤ p ≤ 5 bar in Luft, Sauerstoff, CO₂, gasförmigem H₂O oder Stickoxiden thermisch oxidiert wird. Die Metalle, Legierungen, Gläser und/oder Keramiken werden vorzugsweise in Pulverform eingesetzt. Das eingesetzte Pulver hat vorzugsweise eine mittlere Korngröße ≤ 50 µm. Voraussetzung hierfür ist, daß die Matrixherstellung vollständig oder teilweise in oxidierenden Gasen erfolgt. Die Bedingungen für diese thermische Oxidation sind identisch mit den Bedingungen für die thermische Oxidation der erfindungsgemäßen Fasern. Während der thermischen Oxidation zur Herstellung des Komposits kann bereits eine Sinterung eintreten. In einer weiteren Ausführungsform der Erfindung erfolgt jedoch nach der eigentlichen thermischen Oxidation ein separater Sinterschritt. Die Sinterung kann als sog. druckloses Sintern bei Gasdrücken bis maximal 5 bar, als Gasdrucksintern, bei Gasdrücken im Bereich von 5 bis 200 bar, als heißisostatisches Pressen (als Sinter HIP-Prozeß oder als Kapsel HIP-Prozeß) oder als Heißpressen durchgeführt werden. Im Anschluß oder auch während der Herstellung der Komposite kann gegebenenfalls die thermische Nachbehandlung erfolgen. In diesem Fall können dieselben Bedingungen gewählt werden wie bei der thermischen Nachbehandlung der erfindungsgemäßen Fasern.

Die nachfolgenden Beispiele dienen der Erläuterung der Erfindung, ohne dabei limitierend zu wirken.

### Ausführungsbeispiele:

### Referenzbeispiel:

SiBNC-Pulver mit ca. 2 Gew.-% O₂, das aus ungehärtetem Polyborosilazan durch Pyrolyse hergestellt worden war, wurde 48 h bei 1600°C an Luft oxidiert. Elektronenstrahlbeugungsuntersuchungen im TEM an diesem Pulver belegen, daß die bei der Oxidation gebildete B,N-haltige Schicht und das SiBNC-Bulkmaterial amorph geblieben sind. Die äußere SiO₂-Schicht war kristallin.

Das im High-Resolution-Rasterelektronenmikroskopie (Hi-REM)-Modus mit Materialkontrast aufgenommene Bild (Fig. 1, Vergrößerung 2700:1) zeigt den Schichtaufbau, mit 1: verbleibendem SiBNC-Pulver, Schicht 2: die B,N-haltige amorphe Schicht und Schicht 3: die kristalline SiO₂-Schicht.

### Herstellung der Ausgangsfaser

a) Polymerherstellung
   1000 ml Methylamin wurden in einem evakuierten 5000 ml Dreihalskolben mit 5000 ml Tropftrichter ohne Druckausgleichsrohr bei -78°C einkondensiert. Anschließend gab man eine Lösung von 300 g Cl₃Si-NH-BCl₂ in 2500 ml Petrolether unter starkem Rühren so zu, daß die Innentemperatur nicht über 0°C anstieg. Der Feststoff, der im wesentlichen aus Methylaminhydrochlorid bestand, wurde über eine Umkehrfritte abfiltriert. Von der klaren Petroletherlösung wurde das Lösungsmittel unter vermindertem Druck abdestilliert. Es blieb ein farbloses zähflüssiges Öl zurück (250 g). Das Öl wurde anschließend 10 Minuten lang bei 240°C zu einem festen Polyborosilazan thermisch vernetzt. Das Polymer wies einen Schmelzpunkt von 200°C auf. Zusammensetzung in Gew.-% Si: 18,0; B: 7,5; N: 37,4; H: 8,1; C: 28,1; O: 0,4.
b) Herstellung der Grünfaser
   1. Aus den in a) hergestellten Polymeren wurden Fasern gesponnen. Die Viskosität des Polymeren lag während des Spinnens bei ca. 2 Pas. Es wurden 100 Filamente gleichzeitig ersponnen. Während des Spinnvorganges wurde die Faser im Trockenturm zur weiteren Vernetzung mit heißen Stickstoff angeblasen. Beim Verspinnen des Polymers betrug die Düsentemperatur 180°C und der Spinndruck 2 MPa. Bei einer Ziehgeschwindigkeit von 200 m/min besaßen die Fasern dann einen Durchmesser von ca. 20 µm in der nichtpyrolysierten Faser (Gelfaser). Eine Schwankung des Faserdurchmessers wurde bei konstant gehaltenen Parametern während des Spinnens nicht beobachtet. Die Fasern schmolzen bei ca. 210°C noch auf, das heißt, sie waren noch nicht ausreichend vernetzt.
   2. Aus den in a) hergestellten Polymeren wurden Fasern gesponnen. Die Viskosität des Polymeren lag während des Spinnens bei ca. 2 Pas. Es wurden 100 Filamente gleichzeitig ersponnen. Während des Spinnvorganges wurde die Faser im Trockenturm zur weiteren Vernetzung mit heißem NH₃ angeblasen.

   Beim Verspinnen des Polymers wurde eine Düsentemperatur von 190°C und ein Spinndruck von 2,5 MPa gewählt. Bei einer Ziehgeschwindigkeit von 200 m/min besaßen die Fasern dann Durchmesser von ca. 18 µm in der nicht-pyrolysierten Faser (Gelfaser). Die Fasern waren unschmelzbar.
   Die Pyrolyse wurde bei 1500°C in N₂-Atmosphäre durchgeführt.
c) Härtung der Grünfaser
   1. 300 g der nach b) hergestellten Grünfaser wurden auf der Rolle unter Inertbedingungen in einen Reaktor eingebracht. Der Reaktor wurde außerdem mit 5 g Dichlorsilan beladen und anschließend auf 40°C aufgeheizt, so daß das Dichlorsilan verdampfen konnte. Nach ca. 2 Stunden wurden die Fasern aus dem Reaktor entfernt. Die Fasern waren unschmelzbar. Danach wurden die Fasern in Stickstoffatmosphäre bei 1500°C pyrolisiert.
   2. 300 g der nach b) hergestellten Grünfasern wurden auf der Rolle unter Inertbedingungen in einen Reaktor eingebracht. Der Reaktor wurde außerdem mit 5 g Boran-Dimethylamin-Komplex beladen und anschließend auf 120°C aufgeheizt. Nach ca. 2 Stunden wurden die Fasern aus dem Reaktor entfernt. Die Fasern waren unschmelzbar. Danach wurden die Fasern in Stickstoffatmosphäre bei 1500°C pyrolisiert.

### Beispiel 1:

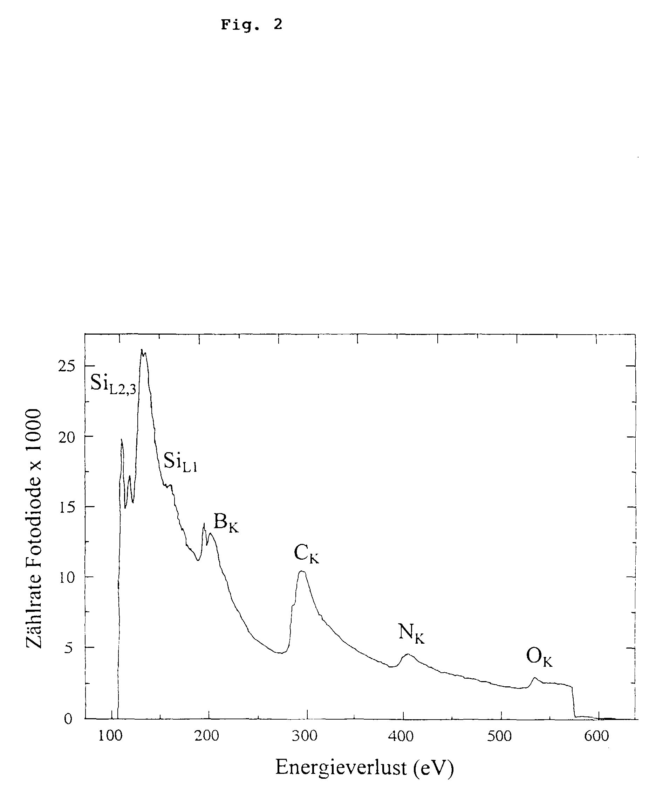

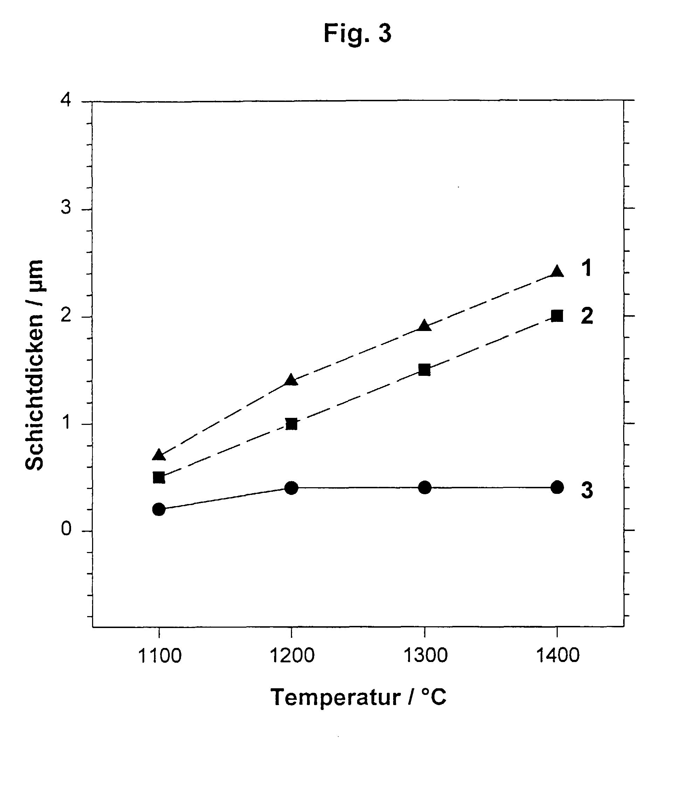

Die nach a) und b2) erhaltenen Fasern, die einen Sauerstoffgehalt von 4,9 Gew.-% aufwiesen, wurden jeweils 24 h in Luft zwischen 1100 und 1400°C in 100°C-Schritten oxidiert. Die Atmosphäre wurde 480 mal während der Haltezeit ausgetauscht. Bruchflächen der Fasern wurden im REM untersucht. An allen Fasern konnte mittels REM im Materialkontrastmodus und Röntgenmikroanalyse eine Oxidationsschicht nachgewiesen werden, die sich in eine B, N-reiche Schicht und eine SiO₂-enthaltende Schicht aufteilte. TEM-Untersuchungen zeigten, daß die B,N-haltige Schicht in allen Fällen BN-Partikel mit hexagonaler und turbostratischer Kristallstruktur aufwies. Fig. 2 zeigt ein typisches PEELS-Spektrum (Elektronenenergieverlustspektroskopie in Paralleldetektion) aufgenommen in der B,N-haltigen Schicht zwischen den BN-Partikeln. Das Spektrum zeigt die Elemente Silicium, Bor, Stickstoff, Sauerstoff und Kohlenstoff, wobei der Kohlenstoff teilweise oder ganz von der Kohlenstoffbedampfung der Probe herrühren kann. Die Dicken der Oxidations- und Einzelschichten wurden mit dem REM an Bruchflächen bestimmt. Während die amorphe Faserseele und die SiO₂-Schicht einen glatten Bruchspiegel aufweisen, ist die Bruchfläche der BN-Kristalle enthaltenden Schicht rauh. Dieser morphologische Unterschied wurde zur Messung herangezogen. Die Schichtdicken sind in Tabelle 1 zusammengestellt. Figur 3 ist eine graphische Darstellung der Schichtdicke in Abhängigkeit von der Temperatur im Bereich von 1100 bis 1400°C. Aus Figur 3 ist ersichtlich, daß mit steigender Oxidationstemperatur die Oxidationsschichtdicke (die Summe aus BN-Kristallite enthaltender und SiO₂-enthaltender Schicht) und die Dicke der SiO₂-enthaltenden Schicht 2 zunimmt, während die Dicke der BN-Kristalle enthaltenden Schicht 3 im Temperaturbereich von 1200 bis 1400°C weitgehend konstant bleibt.

**Tabelle 1:**

| Oxidationstemperatur → Schichtdicke↓ | 1100°C | 1200°C | 1300°C | 1400°C |
|---|---|---|---|---|
| Oxidationsschicht | 0,7 µm | 1,4 µm | 1,9 µm | 2,4 µm |
| SiO₂-enthaltende Schicht | 0,5 µm | 1,0 µm | 1,5 µm | 2,0 µm |
| BN-Kristalle enthaltende Beschichtung | 0,2 µm | 0,4 µm | 0,4 µm | 0,4 µm |

### Beispiel 2:

Die nach a), b1) und c1) erhaltenen Fasern, die einen Sauerstoffgehalt von 1,3 Gew.-% aufwiesen, wurden 24 h bzw. 100 h in Luft bei 1400°C oxidiert. Die Aufheizrate betrug 20°C/min. Die Atmosphäre wurde 480 bzw. 2000 mal während der Haltezeit ausgetauscht. Bruchflächen der Fasern wurden im REM untersucht. An den Fasern wurde mittels REM und Röntgenmikroanalyse eine Oxidationsschicht nachgewiesen, die aus einer B,N-reichen und einer SiO₂-enthaltenden Schicht zusammengesetzt war. TEM-Untersuchungen zeigten, daß die B,N-haltige Schicht in allen Fällen BN-Partikel mit hexagonaler und turbostratischer Kristallstruktur aufwies, und PEELS-Spektren, aufgenommen in der B,N-haltigen Schicht zwischen den BN-Partikeln, zeigten die Elemente Silicium, Bor, Stickstoff, Sauerstoff und Kohlenstoff, wobei der Kohlenstoff teilweise oder ganz von der Kohlenstoffbedampfung der Probe herrühren kann. Die Dicken der Oxidations- und Einzelschichten sind in Tabelle 2 zusammengestellt. Die Schichtdicken wurden mit dem REM bestimmt. Mit zunehmender Oxidationsdauer nimmt die Dicke der BN-Kristalle enthaltenen Beschichtung zu. Bei der gewählten schnellen Aufheizrate (20°C/min) hat sich eine konstante SiO₂-Schichtdicke bereits in weniger als 24 h aufgebaut. Sauerstoffarme Fasern zeigen dickere BN-Kristalle enthaltene Beschichtungen als sauerstoffreiche (s. Beispiel 1, 1400°C, 24 h).

**Tabelle 2:**

| Oxidationsdauer → Schichtdicke ↓ | 24 h | 100 h |
|---|---|---|
| Oxidationsschicht | 3,0 µm | 3,2 µm |
| SiO₂-enthaltende Schicht | 2,0 µm | 2,0 µm |
| BN-Kristalle enthaltene Beschichtung | 1,0 µm | 1,2 µm |

### Beispiel 3:

Die nach a), b1) und c1) erhaltenen Fasern, die durch einen erhöhten Sauerstoffgehalt des Polymers einen Sauerstoffgehalt von 4,9 Gew.-% aufwiesen, wurden 24 h an Luft bei 1400°C oxidiert. Die oxidierten Si,B,N,C-enthaltenden amorphen Fasern wurden in einer wässrigen Lösung mit Flußsäure bei Raumtemperatur geätzt. Nach der Ätzung konnte mittels Röntgenmikroanalyse kein Si oder O an der Faseroberfläche nachgewiesen werden. Die Si,B,N,C-enthaltende Faserseele und die B,N-Kristalle enthaltende Beschichtung, die BN-Partikel mit hexagonaler Kristallstruktur enthielt, wurden nicht angegriffen.

### Beispiel 4:

Die nach a), b1) und c2) erhaltenen Fasern, in denen im Schritt c2) anstelle von 5 g Boran-Dimethylamin-Komplex 5 g Hydrazin eingesetzt wurden, und die einen Sauerstoffgehalt von 1,3 Gew.-% aufwiesen, wurden 24 h bei 1100°C in Sauerstoff oxidiert. Anschließend wurden die Fasern 48 h bei 1650°C in N₂ ausgelagert. Die Ofenatmosphäre wurde 2900 mal ausgetauscht. Die REM-Untersuchung ergab, daß die oberflächliche SiO₂-enthaltende Schicht während der Nachbehandlung abgedampft war. Mit der Röntgenmikroanalyse wurden auf den Faseroberflächen als Hauptbestandteile B und N nachgewiesen, daneben noch Si und in Spuren O. Kohlenstoff wurde nicht gefunden. Es hatte sich eine B,N-reiche Schicht ausgebildet sowie Si, das mindestens eine Bindung zu Sauerstoff, Bor, Stickstoff und/oder Kohlenstoff aufweist, die hexagonal kristallisierte BN-Partikel enthielt.

### Beispiel 5:

Die nach a), b1) und c2) erhaltenen Fasern, die einen Sauerstoffgehalt von 1,5 Gew.-% aufwiesen, wurden 100 h bei 1500°C in Luft oxidiert. Die Oxidationsschicht wurde mit dem TEM untersucht. In der B,N-reichen Schicht wurden BN-Kristallite mit ca. 20 bis 70 nm Durchmesser gefunden. Die kleineren BN-Kristalle befanden sich im Übergang zur Si,B,N,C-enthaltende Faserseele, die größeren BN-Kristalle im Übergang zur SiO₂-enthaltenden Schicht. Eine bevorzugte Ausrichtung der BN-Kristallite wurde nicht beobachtet. Mit Elektronenbeugung wurde an den BN-Kristalliten eine hexagonale Struktur identifiziert. Die Kristallite zeigten starke Gitterstörungen, die auf die turbostratische Ordnung hinweisen. Zwischen den BN-Kristalliten befindet sich eine amorphe Phase in der mit PEELS die Elemente Silicium, Bor, Stickstoff, Sauerstoff und Kohlenstoff nachgewiesen wurden, wobei der Kohlenstoff teilweise oder ganz von der Kohlenstoffbedampfung der Probe herrühren kann. Die Anbindung der BN-Kristalle enthaltenen Beschichtung an die Si,B,N,C-enthaltende Faserseele und die SiO₂-enthaltende Schicht erfolgt über kontinuierliche Übergänge. Die Si,B,N,C-enthaltende Faser und die SiO₂-enthaltende Schicht waren amorph. Die Dicke der BN-Kristalle enthaltenen Beschichtung betrug 1,25 µm, die der SiO₂-enthaltenden Schicht 2,6 bis 2,7 µm.

### Beispiel 6:

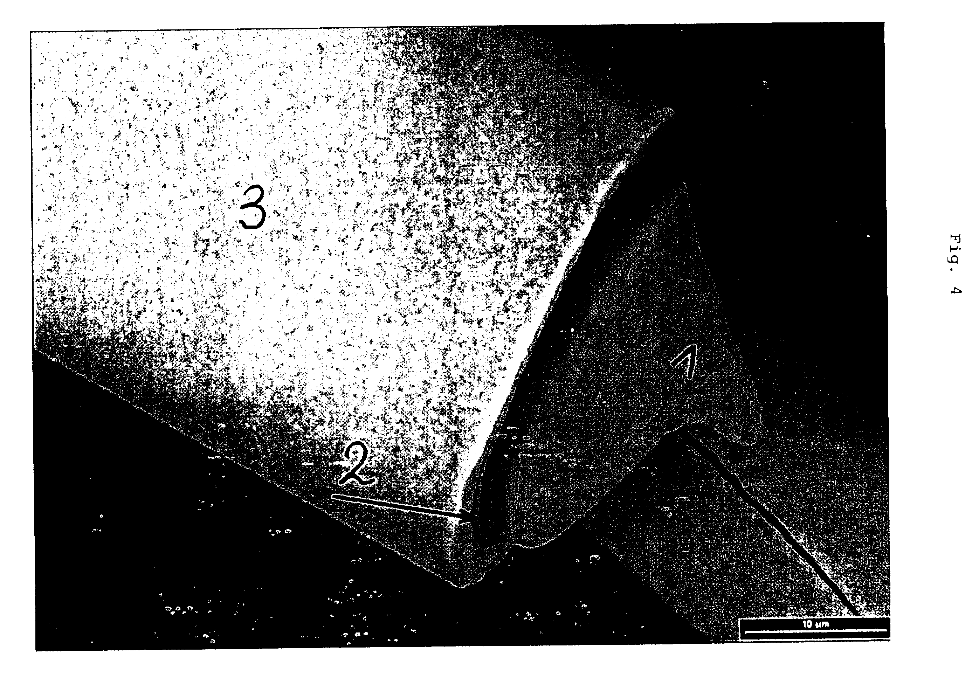

Die nach a) und b2) erhaltenen Fasern, die durch einen erhöhten Sauerstoffgehalt des Polymers einen Sauerstoffgehalt von 4,9 Gew.-% aufwiesen, wurden 24 h bei 1100°C in Luft oxidiert. Anschließend wurden die beschichteten Fasern mittels Chemical Vapor Deposition (CVD) zusätzlich mit ca. 3 µm SiC beschichtet. Hierzu wurde das Faserbündel in Ar auf 900°C aufgeheizt und dann 8 h bei dieser Temperatur einem Methyltrichlorsilandampf ausgesetzt, der sich auf den Fasern in SiC umwandelte. Danach wurden die SiC ummantelten Fasern 1 h bei 1200°C in Argon getempert. Die Anbindung der SiC-Matrix an die SiO₂-enthaltende Schicht war gut. Der Faserverbundwerkstoff zeigte beim Bruch "Faser-Pull-Out", d. h. die erwünschte Festigkeitsunterschiede zwischen Si,B,N,C-enthaltende Faser, Kristallen aufweisenden Schicht und Matrix. REM-Untersuchungen zeigten, daß das "Debonding" innerhalb der BN-Kristalle enthaltenden Beschichtung im Übergang zur Si,B,N,C-enthaltende Faser erfolgte (Fig. 4). Figur 4, aufgenommen im Materialkontrast, zeigt eine Si,B,N,C-enthaltende Faserseele (1), die aus der SiC-Ummantelung (3) herausragt. Dazwischen liegt die SiO₂-enthaltende Schicht (2). Die Auflösung des REM reicht nicht aus, die BN-Kristalle enthaltende Beschichtung aufzulösen.

### Beispiel 7:

Die nach Beispiel 3 erhaltenen noch nicht oxidierten Fasern (4,9 % O-Gehalt) wurden 24 h bei 1100°C in Luft oxidiert, in eine Al/Al₂O₃/SiC-Pulvermischung eingebettet und ein Formkörper durch isostatisches Pressen bei 400 MPa hergestellt. Der Formkörper wurde durch Reaktionssintern an Luft (1550°C, 1 h) in Mullit umgewandelt. Von diesem Komposit wurde ein Anschliff hergestellt. Die Si,B,N,C-enthaltenden amorphen Fasern wurden in die Mullitmatrix eingebunden. Während der Reaktionssinterung blieb die BN-Kristallite enthaltende Schicht auf der erfindungsgemäßen Faser erhalten. Die darüber liegende SiO₂-enthaltende Schicht war nicht sichtbar. Das gebildete SiO₂ hatte während der Reaktionssinterung der Matrix mit Al oder Al₂O₃ reagiert und bildete Mullit. Die amorphe erfindungsgemäße Faser kristallisierte während der Matrixherstellung nicht aus.

## Patentansprüche

1. Si, B, N-enthaltende amorphe Fasern, dadurch gekennzeichnet, daß sich diese zusammensetzen aus einem Kern, der zu mehr als 80 Vol.-% aus einem dreidimensionalen glasartigen Netzwerk besteht, das SiN- sowie BN- und gegebenenfalls auch SiO-, SiC-, BC-, CC-, CN- und/oder BO-Bindungen enthält, und mindestens einer darüberliegenden Beschichtung, die BN-Kristalle mit hexgonaler Struktur sowie Si, das mindestens eine Bindung zu Sauerstoff, Bor, Stickstoff und/oder Kohlenstoff aufweist, enthält.

2. Si, B, N-enthaltende amorphe Fasern nach Anspruch 1, dadurch gekennzeichnet, daß der Kern folgende Zusammensetzung aufweist:
4 ≤ x ≤ 20 Gew.-% B,
5 ≤ x ≤ 50 Gew.-% N,
10 ≤ x ≤ 50 Gew.-% Si,
0 ≤ x ≤ 35 Gew.-% C und
0 ≤ x ≤ 8 Gew.-% O,
wobei die Summe der Bestandteile 100 Gew.-% ergibt.

3. Si, B, N-enthaltende amorphe Fasern nach einem der Ansprüche 1 bis 2, dadurch gekennzeichnet, daß die Menge der BN-Kristalle in der Beschichtung 5 Vol-% ≤ x ≤ 100 Vol-% kristallines BN beträgt.

4. Si, B, N-enthaltende amorphe Fasern nach einem oder mehreren der Ansprüche 1 oder 3, dadurch gekennzeichnet, daß die BN-Kristalle enthaltene Beschichtung als weiteren Bestandteil amorphes BN enthält.

5. Si, B, N-enthaltende amorphe Fasern nach einem oder mehreren der Ansprüche 1 bis 4, dadurch gekennzeichnet, daß sich über der Beschichtung noch eine darüberliegende Schicht befindet, die überwiegend aus SiO₂ besteht.

6. Verfahren zur Herstellung von Si, B, N-enthaltenden amorphen Fasern nach einem oder mehreren der Ansprüche 1 bis 5, dadurch gekennzeichnet, daß Si, B, N-enthaltende amorphe Fasern, die zu mehr als 80 Vol.-% aus einem dreidimensionalen glasartigen Netzwerk bestehen und SiN- sowie BN- und gegebenenfalls auch SiO-, SiC-, BC-, CC-, CN- und/oder BO-Bindungen enthalten, thermisch oxidiert werden.

7. Verfahren nach Anspruch 6, dadurch gekennzeichnet, daß die thermische Oxidation über einen Zeitraum von 0,1 min ≤ t ≤ 100 h bei Temperaturen von 800°C ≤ T ≤ 1700°C bei einem Druck von 1 mbar ≤ p ≤ 5 bar durchgeführt wird.

8. Verfahren nach einem der Ansprüche 6 oder 7, dadurch gekennzeichnet, daß nach der thermischen Oxidation eine thermische Nachbehandlung in nicht-oxidierender Atmosphäre angeschlossen wird, die über einen Zeitraum von 5 min ≤ t ≤ 140 h bei Drücken zwischen 10⁻⁵ und 2 bar und bei Temperaturen von 800 ≤ T ≤ 1900°C in N₂, CO und/oder Edelgasen durchgeführt wird.

9. Komposite aus einer Matrix aus Metallen, Legierungen, Gläsern und/oder Keramiken, dadurch gekennzeichnet, daß 30 bis 70 Vol.-% dieser Komposite amorphe Fasern nach einem oder mehreren der Ansprüche 1 bis 5 sind.

10. Verfahren zur Herstellung von Kompositen nach Anspruch 9, dadurch gekennzeichnet, daß mindestens eine amorphe Faser, die zu mehr als 80 Vol.-% aus einem dreidimensionalen glasartigen Netzwerk besteht, das SiN- sowie BN- und gegebenenalls auch SiO-, SiC-, BC-, CC-, CN-und/oder BO-Bindungen enthält, in Metalle, Legierungen, Gläsern und/oder Keramiken eingebettet und zusammen mit diesen über einen Zeitraum von 0,1 min ≤ t ≤ 100 h bei Temperaturen von 800°C ≤ T ≤ 1700°C, bei einem Druck von 0,1 mbar ≤ p ≤ 5 bar in Luft, Sauerstoff, CO₂, gasförmigem H₂O oder Stickoxiden thermisch oxidiert wird.

11. Verwendung der Si, B, N-enthaltenden amorphen Fasern nach einem oder mehreren der Ansprüche 1 bis 5 als Faserverstärkung in anorganischen Werkstoffen.

## Claims

1. Amorphous fibres containing Si, B and N, characterized in that they are composed of a core, more than 80% by volume of which core consists of a three-dimensional glassy network which contains SiN bonds and BN bonds and optionally also SiO, SiC, BC, CC, CN and/or BO bonds, and of at least one coating overlying the core which contains BN crystals having a hexagonal structure and Si having at least one bond to oxygen, boron, nitrogen and/or carbon.

2. Amorphous fibres containing Si, B and N according to Claim 1, characterized in that the core has the following composition:
4 ≤ × ≤ 20% by weight of B,
5 ≤ × ≤ 50% by weight of N,
10 ≤ × ≤ 50% by weight of Si,
0 ≤ × ≤ 35% by weight of C and
0 ≤ × ≤ 8% by weight of O,
the sum of the constituents being 100%.

3. Amorphous fibres containing Si, B and N according to Claim 1 or 2, characterized in that the amount of BN crystals in the coating is 5% by volume ≤ × ≤ 100% by volume of crystalline BN.

4. Amorphous fibres containing Si, B and N according to one or more of Claims 1 to 3, characterized in that the coating which contains BN crystals further contains amorphous BN as a further constituent.

5. Amorphous fibres containing Si, B and N according to Claims 1 to 4, characterized in that there is an additional overlying layer consisting predominantly of SiO₂ above the coating.

6. Process for producing amorphous fibres containing Si, B and N according to one or more of Claims 1 to 5, characterized in that amorphous fibres containing Si, B and N, of which consists more than 80% by volume of a three-dimensional glassy network and which contain SiN bonds and BN bonds and optionally also SiO, SiC, BC, CC, CN and/or BO bonds, are thermally oxidized.

7. Process according to Claim 6, characterized in that the thermal oxidation is carried out over a period of 0.1 min ≤ t ≤ 100 hours at temperatures of 800°C ≤ T ≤ 1700°C at a pressure of 1 mbar ≤ p ≤ 5 bar.

8. Process according to Claim 6 or 7, characterized in that the oxidation is followed by a thermal aftertreatment in a non-oxidizing atmosphere, carried out over a period of 5 min ≤ t ≤ 140 hours, at pressures between 10⁻⁵ and 2 bar and at temperatures of 800 ≤ T ≤ 1900°C, in N₂, CO and/or noble gases.

9. Composites having a matrix comprising metals, alloys, glasses and/or ceramics, characterized in that 30 to 70% by volume of these composites are amorphous fibres according to one or more of Claims 1 to 5.

10. Process for producing composites according to Claim 9, characterized in that at least one amorphous fibre, more than 80% by volume of which consists of a three-dimensional glassy network which contains SiN bonds and BN bonds and optionally also SiO, SiC, BC, CC, CN and/or BO bonds, is embedded in metals, alloys, glasses and/or ceramics and is thermally oxidized together with these over a period of 0.1 min ≤ t ≤ 100 hours at temperatures of 800°C ≤ T ≤ 1700°C, at a pressure of 0.1 mbar ≤ p ≤ 5 bar, in air, oxygen, CO₂, gaseous H₂O or nitrogen oxides.

11. Use of the amorphous fibres containing Si, B and N according to one or more of Claims 1 to 5 as a fibre reinforcement in inorganic materials.

## Revendications

1. Fibres amorphes contenant Si, B, N, caractérisées en ce qu'elles sont constituées d'un noyau consistant lui-même pour plus de 80 % en volume en un réseau vitreux tridimensionnel contenant des liaisons SiN et BN, et le cas échéant également des liaisons SiO, SiC, BC, CC, CN et/ou BO, et au moins un revêtement superposé qui contient des cristaux de BN à structure hexagonale et Si, celui-ci avec au moins une liaison vers l'oxygène, le bore, l'azote et/ou le carbone.

2. Fibres amorphes contenant Si, B, N selon la revendication 1, caractérisées en ce que le noyau possède la composition suivante :
4 ≤ x ≤ 20 % en poids de B,
5 ≤ x ≤ 50 % en poids de N,
10 ≤ x ≤ 50 % en poids de Si,
0 ≤ x ≤ 35 % en poids de C et
0 ≤ x ≤ 8 % en poids d'O,
la somme des constituants représentant 100 % en poids.

3. Fibres amorphes contenant Si, B, N selon l'une des revendications 1 à 2, caractérisées en ce que la quantité des cristaux de BN dans le revêtement satisfait à la relation : 5 % en volume ≤ x ≤ 100 % en volume de BN cristallisé.

4. Fibres amorphes contenant Si, B, N selon une ou plusieurs des revendications 1 ou 3, caractérisées en ce que le revêtement contenant les cristaux de BN contient du BN amorphe en tant qu'autre constituant.

5. Fibres amorphes contenant Si, B, N selon une ou plusieurs des revendications 1 à 4, caractérisées en ce que, sur le revêtement, il y a une couche superposée consistant principalement en SiO₂.

6. Procédé pour la préparation des fibres amorphes contenant Si, B, N selon une ou plusieurs des revendications 1 à 5, caractérisé en ce que l'on soumet à oxydation thermique des fibres amorphes contenant Si, B, N, qui consistent pour plus de 80 % en volume en un réseau vitreux tridimensionnel et contiennent des liaisons SiN et BN et le cas échéant également des liaisons SiO, SiC, BC, CC, CN et/ou BO.

7. Procédé selon la revendication 6, caractérisé en ce que l'oxydation thermique est réalisée en une durée de 0,1 min ≤ t ≤ 100 h à des températures de 800°C ≤ T ≤ 1700°C sous une pression de 1 mbar ≤ p ≤ 5 bars.

8. Procédé selon l'une des revendications 6 ou 7, caractérisé en ce que l'oxydation thermique est suivie d'un traitement complémentaire thermique en atmosphère non oxydante, traitement que l'on réalise en une durée de 5 min ≤ t ≤ 140 h à des pressions allant de 10⁻⁵ à 2 bars et à des températures de 800 ≤ T ≤ 1900°C en atmosphère d'azote, de CO et/ou de gaz rares.

9. Matières composites consistant en une gangue de métaux, d'alliages, de verres et/ou de matières céramiques, caractérisées en ce que 30 à 70 % de leur volume sont constitués de fibres amorphes selon une ou plusieurs des revendications 1 à 5.

10. Procédé pour la fabrication des matières composites selon la revendication 9, caractérisé en ce l'on noie au moins une fibre amorphe consistant pour plus de 80 % en volume en un réseau vitreux tridimensionnel qui contient des liaisons SiN et BN et le cas échéant également des liaisons SiO, SiC, BC, CC, CN et/ou BO, dans des métaux, des alliages, des verres et/ou des matières céramiques et on soumet l'ensemble à oxydation thermique pendant une durée de 0,1 min ≤ t ≤ 100 h à des températures de 800°C ≤ T ≤ 1700°C sous une pression de 0,1 mbar ≤ p ≤ 5 bars dans l'air, l'oxygène, le CO₂, H₂O gazeux ou des oxydes d'azote.

11. Utilisation des fibres amorphes contenant Si, B, N selon une ou plusieurs des revendications 1 à 5 pour le renforcement de matériaux minéraux.
